# EUROPEAN PATENT APPLICATION

(11) **EP 4 521 843 A1**
(43) Date of publication of application: **12.03.2025**
(21) Application number: 23845593.5
(22) Date of filing: 26.07.2023
(51) Int. Cl.: H04W 74/08

(54) **METHOD FOR DETERMINING SIDELINK CHANNEL ACCESS MODE, AND ELECTRONIC DEVICE AND STORAGE MEDIUM**

(30) Priority: 28.07.2022 CN 202210899990
(71) Applicant: ZTE Corporation, Shenzhen, Guangdong 518057 (CN)
(72) Inventor: CHEN, Jie, Shenzhen, Guangdong 518057 (CN); LU, Youxiong, Shenzhen, Guangdong 518057 (CN); MIAO, Ting, Shenzhen, Guangdong 518057 (CN); XING, Weimin, Shenzhen, Guangdong 518057 (CN); HE, Haigang, Shenzhen, Guangdong 518057 (CN)
(74) Representative: Aipex B.V.
(86) International application number: PCT/CN2023/109323
(87) International publication number: WO 2024/022385

(57) **Abstract**

Provided are a method for determining a sidelink channel access type, an electronic device and a storage medium. The method includes: a first node acquires first information; and the first node determines a channel access type of a first signal of the first node according to the first information. In embodiments of the present application, the channel access type is accurately determined, so the failure rate of channel access can be reduced, and the communication quality can be improved.

## Description

### TECHNICAL FIELD

The present application relates to the field of wireless communication technology and, in particular, to a method for determining a sidelink channel access type, an electronic device and a storage medium.

### BACKGROUND

At present, the 3rd Generation Partnership Project (3GPP) Release 18 (R18) approves the sidelink (SL) communication in unlicensed spectrum, which is called SL-U. However, equipment other than SL-U equipment may exist in unlicensed spectrum, such as New Radio in unlicensed spectrum (NR-U) equipment, Wireless Fidelity (Wi-Fi) equipment, Bluetooth equipment. The SL-U equipment needs to perform Listen Before Talk (LBT) on a channel before transmission and can only transmit signals when the channel is determined to be idle, to avoid communication interference within or between systems. There are usually two kinds of LBT for 3GPP systems in unlicensed spectrum, that is, LBT for load-based equipment (LBE) and LBT for frame-based equipment (FBE). The channel access type usually used by LBE includes two types: a first channel access type (type1) and a second channel access type (type2). In the first channel access type, Listening to a channel needs to be performed for a period before transmission, and when the channel remains idle during this period, it can be considered that the first channel access type succeeds, and the equipment can then transmit a channel/signal. In the second channel access type, is suitable for some special signal transmission or signal transmission within a channel occupancy time (COT). For the COT, after the equipment successfully accesses the channel using the first channel access type, it is considered that the equipment initializes a COT, and transmission within the COT can no longer use the first channel access type which requires a relatively long period for listening to channel. For the SL-U system, both the first channel access type and the second channel access type can be used for channel access. However, for the SL-U system, in the case where there is no base station for scheduling or the case where there is a base station for scheduling, but the base station works in licensed spectrum, the user equipment (UE) is not able to be assisted in listening or occupying a channel, resulting in a relatively low success rate of channel access of the existing SL UE.

### SUMMARY

The main purpose of embodiments of the present application is to provide a method for determining a sidelink channel access type, an electronic device and a storage medium, to determine the sidelink channel access type and improve the success rate of channel access.

The embodiments of the present application provide a method for determining a sidelink channel access type. The method includes the following.

A first node acquires first information.

A channel access type of a first signal of the first node is determined according to the first information.

The embodiments of the present application further provide an electronic device. The electronic device includes at least one processor and a memory configured to store at least one program.

The at least one program, when executed by the at least one processor, causes the at least one processor to perform the method for determining a sidelink channel access type according to any embodiment of the present application.

The embodiments of the present application further provide a computer-readable storage medium configured to store at least one program which, when executed by at least one processor, causes the at least one processor to perform the method for determining a sidelink channel access type according to any embodiment of the present application.

### BRIEF DESCRIPTION OF DRAWINGS

FIG. 1 is a flowchart of a method for determining a sidelink channel access type according to an embodiment of the present application;
FIG. 2 is a flowchart of a method for determining a sidelink channel access type according to an embodiment of the present application;
FIG. 3 is a flowchart of a method for determining a sidelink channel access type according to an embodiment of the present application;
FIG. 4 is a flowchart of a method for determining a sidelink channel access type according to an embodiment of the present application;
FIG. 5 is a flowchart of a method for determining a sidelink channel access type according to an embodiment of the present application;
FIG. 6 is a flowchart of a method for determining a sidelink channel access type according to an embodiment of the present application;
FIG. 7 is a flowchart of a method for determining a sidelink channel access type according to an embodiment of the present application;
FIG. 8 is a flowchart of a method for determining a sidelink channel access type according to an embodiment of the present application;
FIG. 9 is a flowchart of a method for determining a sidelink channel access type according to an embodiment of the present application;
FIG. 10 is an schematic diagram of a method for determining a sidelink channel access type according to an embodiment of the present application;
FIG. 11 is an schematic diagram of a method for determining a sidelink channel access type according to an embodiment of the present application;
FIG. 12 is a flowchart of a method for determining a sidelink channel access type according to an embodiment of the present application;
FIG. 13 is a flowchart of a method for determining a sidelink channel access type according to an embodiment of the present application;
FIG. 14 is a flowchart of a method for determining a sidelink channel access type according to an embodiment of the present application;
FIG. 15 is a flowchart of a method for determining a sidelink channel access type according to an embodiment of the present application;
FIG. 16 is a flowchart of a method for determining a sidelink channel access type according to an embodiment of the present application;
FIG. 17 is a flowchart of a method for determining a sidelink channel access type according to an embodiment of the present application;
FIG. 18 is an schematic diagram of a method for determining a sidelink channel access type according to an embodiment of the present application;
FIG. 19 is a flowchart of a method for determining a sidelink channel access type according to an embodiment of the present application;
FIG. 20 is a structural diagram of an apparatus for determining a sidelink channel access type according to an embodiment of the present application; and
FIG. 21 is a structural diagram of an electronic device according to an embodiment of the present application.

### DETAILED DESCRIPTION

It is to be understood that the embodiments described herein are intended to explain the present application, not to limit the present application.

Suffixes such as "module", "component" or "unit" used for indicating elements in the subsequent description are used merely for facilitating the description of the present application and have no particular meaning in themselves. Therefore, "module", "component" or "unit" may be used in a mixed manner.

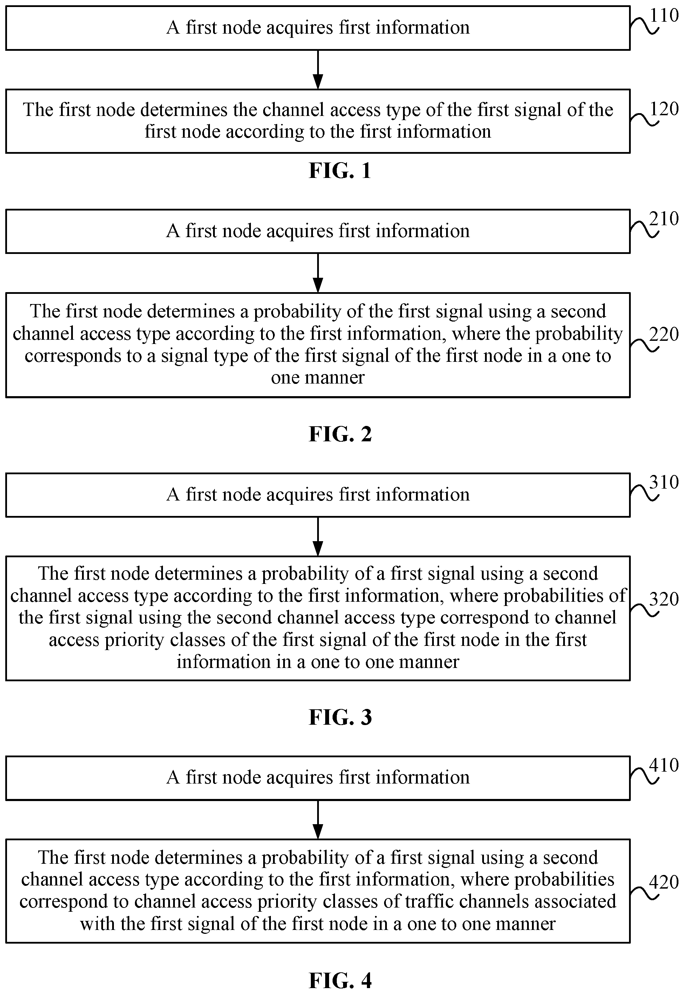

FIG. 1 is a flowchart of a method for determining a sidelink channel access type according to an embodiment of the present application. The embodiments of the present application are applicable to the case of determining a channel access type in sidelink wireless communication. The method may be performed by an apparatus for determining a sidelink channel access type in an embodiment of the present application, and the apparatus may be implemented by software and/or hardware and is generally integrated in a terminal. Referring to FIG. 1, the method provided in the embodiments of the present application specifically includes the following operations.

In operation 110, a first node acquires first information.

The first node may be UE that performs the method of the embodiments of the present application. The first information may be information acquired by the first node for determining a to-be-transmitted channel or a to-be-transmitted signal and may include a transmission situation of a first signal and a transmission situation of a second signal.

In an embodiment of the present application, the first node may acquire the first information for determining a channel access type of the first signal.

In operation 120, the first node determines the channel access type of the first signal of the first node according to the first information.

Specifically, the channel access type for the first signal to access channel may be determined according to the first information. The channel access type may include a first channel access type (type1) and a second channel access type. In the first channel access type, listening to channel needs to be performed for a period before transmission. When the channel remains idle, it can be considered that channel access is successful through the first channel access type, and the equipment can then transmit a signal/channel. The period for listening to channel is usually related to a channel access priority class (CAPC) of the to-be-transmitted signal or service. Generally, the higher the priority of the traffic or signal is, the shorter the period for listening to channel is required, and the easier it is to successfully access the channel for data transmission. The second channel access type is suitable for some special signal transmission or signal transmission within a channel occupancy time (COT). For the COT, after the equipment successfully accesses the channel using type1, it is considered that the equipment initializes a COT, and transmission within the COT can no longer use type1 which requires a relatively long period for listening to channel. Channel access type type2 includes type2A, type2B and type2C. Type2A requires a gap of 25 microseconds (25us) between a current transmission and a previous transmission, type2B requires a gap of 16us between the current transmission and the previous transmission, type2C requires a gap of no more than 16us between the current transmission and the previous transmission, and the three types, that is, type2A, type2B, and type2C, correspond to three cases that the LBT before transmission only needs to be performed for 25us, the LBT before transmission only needs to be performed for 16us, or the LBT before transmission do not need to be perfomed, respectively.

In the embodiments of the present application, the first node acquires the first information, and the channel access type of the first signal is determined according to the first information, so the sidelink channel access type is accurately determined, and the success rate of channel access is improved.

In some embodiments, the first information includes at least one of: transmission situation of the first signal, transmission situation of a second signal, or, a probability of the first signal using the second channel access type corresponding to transmission situation of the first signal, where the first signal includes a to-be-transmitted channel/signal of the first node, and the second signal includes a transmitted channel/signal of the first node and a transmitted channel/signal of the second node.

In some embodiments, the transmission situation of the first signal includes at least one of: a signal type of the first signal of the first node, where the signal type includes at least one of a physical sidelink control channel (PSCCH)/physical sidelink shared channel (PSSCH), a sidelink synchronization signal block S-SSB, a physical sidelink feedback channel (PSFCH), a channel state information reference signal (CSI-RS) or a positioning reference signal (PRS); a channel access priority class of the first signal of the first node; a channel access priority class of a traffic channel associated with the first signal of the first node; the transmission times of the first signal of the first node; the transmission times of a traffic channel associated with the first signal of the first node; a group where the first signal of the first node is located; a relative position of the first signal of the first node within a group where the first signal of the first node is located; or a feedback occasion of the first signal of the first node.

In some embodiments, FIG. 2 is a flowchart of a method for determining a sidelink channel access type according to an embodiment of the present application, illustrating an example where the transmission situation of the first signal includes the signal type of the first signal of the first node. Referring to FIG. 2, the method provided in the embodiments of the present application specifically includes the following operations.

In operation 210, a first node acquires first information.

In operation 220, the first node determines a probability of the first signal using a second channel access type according to the first information, where the probability corresponds to a signal type of the first signal of the first node in a one to one manner. A corresponding relationship between the signal types of the first signal and the probabilities is determined according to system configuration, pre-configuration or a predefined rule.

The second channel access type may be applied to special signal transmission or signal transmission within a COT. The second channel access type includes three types, that is, type2A, type2B and type2C. Type2A requires a gap of 25us between the current transmission and the previous transmission, type2B requires a gap of 16us between the current transmission and the previous transmission, type2C requires a gap of no more than 16us between the current transmission and the previous transmission, and the three manners, that is, type2A/type2B/type2C, correspond to three cases that the LBT before transmission only needs to listen to the channel for 25us, for 16us or do not listen to the channel, respectively. The signal type of the first signal may include at least one of a PSCCH/PSSCH, an S-SSB, a PSFCH, a PRS or a CSI-RS.

In the embodiments of the present application, the first information includes the signal type of the first signal of the first node, and the first node determines the probability of using the second channel access type through the signal type of the first signal. The probabilities have a one-to-one corresponding relationship with the signal types of the first signal, and the corresponding relationship may be determined according to the system configuration, the pre-configuration or the predefined rule. Further, in the corresponding relationship, the more urgent the transmission of the signal corresponding to a signal type, the higher the probability of using the second channel access type corresponding to this signal type.

In other embodiments, FIG. 3 is a flowchart of a method for determining a sidelink channel access type according to an embodiment of the present application, illustrating an example where the transmission situation of the first signal includes the channel access priority class of the first signal of the first node. Referring to FIG. 3, the method provided in the embodiments of the present application specifically includes the following operations.

In operation 310, a first node acquires first information.

In operation 320, first node determines a probability of a first signal using a second channel access type according to the first information, where probabilities of the first signal using the second channel access type correspond to channel access priority classes of the first signal of the first node in the first information in a one to one manner. A corresponding relationship between the channel access priority classes of the first signal and the probabilities is determined according to system configuration, pre-configuration or a predefined rule.

In the embodiments of the present application, the first information includes the channel access priority class of the first signal of the first node, and the first node determines the one-to-one corresponding probability of the first signal using the second channel access type through the channel access priority class. The corresponding relationship between the probabilities and the channel access priority classes may be determined according to the system configuration, the pre-configuration or the predefined rule. Further, in some embodiments, the higher the channel access priority class, the higher the probability of the first signal using the second channel access type.

In other embodiments, FIG. 4 is a flowchart of a method for determining a sidelink channel access type according to an embodiment of the present application, illustrating an example where the transmission situation of the first signal includes the channel access priority class of the traffic channel associated with the first signal of the first node. Referring to FIG. 4, the method provided in the embodiments of the present application specifically includes the following operations.

In operation 410, a first node acquires first information.

In operation 420, the first node determines a probability of a first signal using a second channel access type according to the first information, where probabilities correspond to channel access priority classes of traffic channels associated with the first signal of the first node in a one to one manner. A corresponding relationship between the channel access priority classes of the traffic channel associated with the first signal and the probabilities is determined according to system configuration, pre-configuration or a predefined rule.

Specifically, the first information includes the channel access priority class of the traffic channel associated with the first signal, and the first node determines the one-to-one corresponding probability of the first signal using the second channel access type through the channel access priority class of the traffic channel associated with the first signal. The corresponding relationship between the probabilities and the channel access priority classes of the traffic channel associated with the first signal may be determined according to the system configuration, the pre-configuration or the predefined rule. Further, in some embodiments, the higher the channel access priority class of the traffic channel associated with the first signal, the higher the probability of the first signal using the second type of access type.

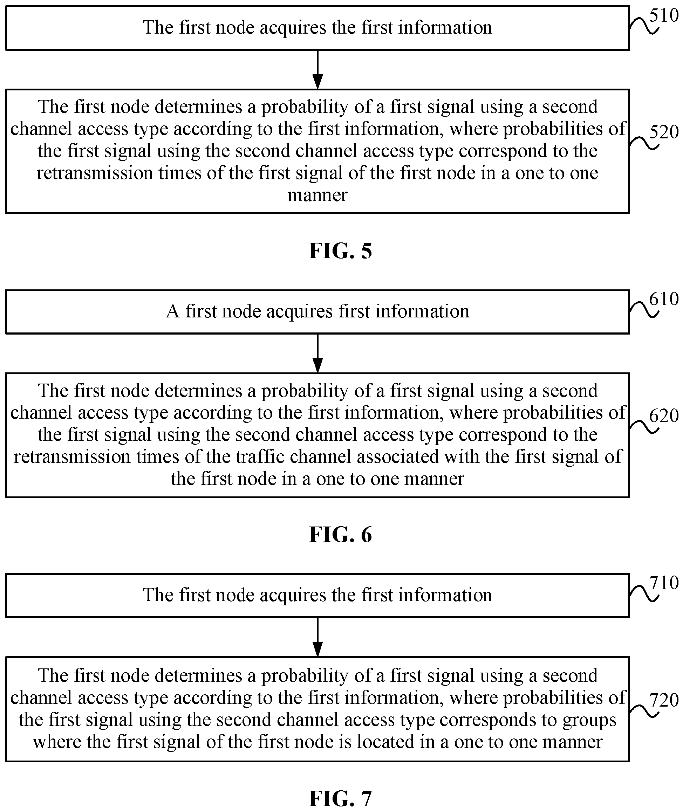

In other embodiments, FIG. 5 is a flowchart of a method for determining a sidelink channel access type according to an embodiment of the present application, illustrating an example where the transmission situation of the first signal includes the transmission times of the first signal of the first node. Referring to FIG. 5, the method provided in the embodiments of the present application specifically includes the following operations.

In operation 510, the first node acquires the first information.

In operation 520, the first node determines a probability of a first signal using a second channel access type according to the first information, where probabilities of the first signal using the second channel access type correspond to the retransmission times of the first signal of the first node in a one to one manner. A corresponding relationship between the retransmission times of the first signal and the probabilities of the first signal using the second channel access type is determined according to system configuration, pre-configuration or a predefined rule.

In the embodiments of the present application, the first information includes the transmission times of the first signal of the first node, and the first node determines the one-to-one corresponding probability of the first signal using the second channel access type through the transmission times of the first signal. The corresponding relationship between the probabilities and the transmission times of the first signal of the first node may be determined according to the system configuration, the pre-configuration or the predefined rule. Further, in some embodiments, the fewer the retransmissions of the first signal of the first node, the higher the probability of the first signal using the second type of access type.

In other embodiments, FIG. 6 is a flowchart of a method for determining a sidelink channel access type according to an embodiment of the present application, illustrating an example where the transmission situation of the first signal includes the transmission times of the traffic channel associated with the first signal of the first node. Referring to FIG. 6, the method provided in the embodiments of the present application specifically includes the following operations.

In operation 610, a first node acquires first information.

In operation 620, the first node determines a probability of a first signal using a second channel access type according to the first information, where probabilities of the first signal using the second channel access type correspond to the retransmission times of the traffic channel associated with the first signal of the first node in a one to one manner. A corresponding relationship between the retransmission times of the traffic channel associated with the first signal and the probabilities of the first signal using the second channel access type is determined according to system configuration, pre-configuration or a predefined rule.

In the embodiments of the present application, the first signal includes the transmission times of the traffic channel associated with the first signal of the first node, and the first node determines the probability of using the second channel access type corresponding to the transmission times of the traffic channel associated with the first signal in a one to one manner. The corresponding relationship between the probabilities and the retransmission times of the traffic channel associated with the first signal may be determined according to the system configuration, the pre-configuration or the predefined rule. In some embodiments, the fewer the retransmission times of the traffic channel associated with the first signal of the first node, the higher the probability of the first signal using the second type of access type.

In other embodiments, FIG. 7 is a flowchart of a method for determining a sidelink channel access type according to an embodiment of the present application, illustrating an example where the transmission situation of the first signal includes the group where the first signal of the first node is located. Referring to FIG. 7, the method provided in the embodiments of the present application specifically includes the following operations.

In operation 710, the first node acquires the first information.

In operation 720, the first node determines a probability of a first signal using a second channel access type according to the first information, where probabilities of the first signal using the second channel access type corresponds to groups where the first signal of the first node is located in a one to one manner. A corresponding relationship between the groups where the first signal is located and the probabilities of the first signal using the second channel access type is determined according to system configuration, pre-configuration or a predefined rule.

In the embodiments of the present application, the first signal includes the group where the first signal of the first node is located, and the first node determines the probability of using the second channel access type corresponding to the group where the first signal is located in a one to one manner. The corresponding relationship between the probabilities and the groups where the first signal of the first node is located may be determined according to the system configuration, the pre-configuration or the predefined rule. It is to be understood that when the first signal is located in different groups, the corresponding probabilities of using the second channel access type may be different.

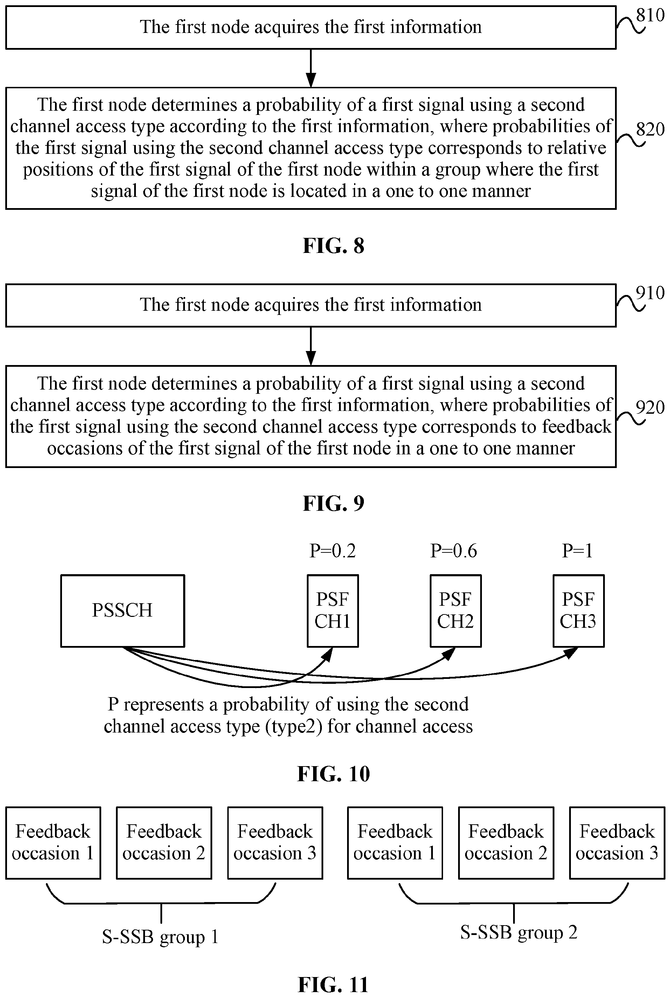

In other embodiments, FIG. 8 is a flowchart of a method for determining a sidelink channel access type according to an embodiment of the present application, illustrating an example where the transmission situation of the first signal includes the relative position of the first signal of the first node within the group where the first signal of the first node is located. Referring to FIG. 8, the method provided in the embodiments of the present application specifically includes the following operations.

In operation 810, the first node acquires the first information.

In operation 820, the first node determines a probability of a first signal using a second channel access type according to the first information, where probabilities of the first signal using the second channel access type corresponds to relative positions of the first signal of the first node within a group where the first signal of the first node is located in a one to one manner. A corresponding relationship between the relative positions of the first signal within the group where the first signal is located and the probabilities of the first signal using the second channel access type is determined according to system configuration, pre-configuration or a predefined rule.

Specifically, the first signal includes the relative position of the first signal of the first node within the group where the first signal of the first node is located, and the first node determines the probability of using the second channel access type corresponding to the relative position of the first signal of the first node within the group where the first signal of the first node is located in a one to one manner. The corresponding relationship between the probabilities and the relative positions of the first signal of the first node within the group where the first signal of the first node is located may be determined according to the system configuration, the pre-configuration or the predefined rule. It is to be understood that when the first signal is located at different relative positions in the group, the corresponding probabilities of using the second channel access type may be different. It is to be understood that the first signal may be located in different groups or the same group. For example, the first signal located at the same relative position in different groups may correspond to the same probability of using the second channel access type, or the first signal located at the same relative position in different groups may correspond to different probabilities of using the second channel access type.

In other embodiments, FIG. 9 is a flowchart of a method for determining a sidelink channel access type according to an embodiment of the present application, illustrating an example where the transmission situation of the first signal includes the feedback occasion of the first signal of the first node. Referring to FIG. 9, the method provided in the embodiments of the present application specifically includes the following operations.

In operation 910, the first node acquires the first information.

In operation 920, the first node determines a probability of a first signal using a second channel access type according to the first information, where probabilities of the first signal using the second channel access type corresponds to feedback occasions of the first signal of the first node in a one to one manner. A corresponding relationship between the feedback occasions of the first signal and the probabilities of the first signal using the second channel access type is determined according to system configuration, pre-configuration or a predefined rule.

In the embodiments of the present application, the first signal includes the feedback occasion of the first signal of the first node, and the first node determines the probability of using the second channel access type corresponding to the feedback occasion of the first signal of the first node in a one to one manner. The corresponding relationship between the probabilities and the feedback occasions of the first signal of the first node may be determined according to the system configuration, the pre-configuration or the predefined rule. In some embodiments, the closer the feedback occasion to a last transmission time of the first signal, the higher the corresponding probability of using the second channel access type.

In some example implementations, the preceding first information may include multiple transmission situations of the first signal, and the probability of using the second channel access type may be determined based on the multiple transmission situations of the first signal. Referring to FIG. 10, for multiple PSFCH feedback occasions which are not continuous in the time domain and correspond to a PSSCH, the channel access type of a current PSFCH is determined according to the relative position of the current PSFCH feedback occasion of the multiple PSFCH feedback occasions corresponding to the PSSCH. The closer the PSFCH feedback occasion of the first node to a last feedback occasion, the higher the probability of using the second channel access type, and the lower the probability of using the first channel access type.

In some embodiments, the corresponding relationship between the PSFCH feedback occasions and the probabilities of using the second channel access type may be shown in Table 1 below.

**Table 1**

| | PSFCH occasion1 | PSFCH occasion2 | PSFCH occasion3 |
|---|---|---|---|
| The probability P of the PSFCH using type2 A/B/C for channel access | 0.2 | 0.6 | 1 |

In other embodiments, the channel access type of the PSFCH corresponding to the PSSCH may be determined, according to the transmission times of the PSSCH. The closer the transmission times of PSSCH to a maximum transmission times, the higher the probability of the PSFCH corresponding to the PSSCH using the second channel access type for channel access, and accordingly, the lower the probability of using the first channel access type.

In some embodiments, the maximum retransmission times of the PSSCH being two are taken as an example. The corresponding relationship between the transmission times of the PSSCH and the probabilities of the PSSCH using the second channel access type may be show in Table 2 below.

**Table 2**

| The transmission times of the PSSSCH corresponding to a current PSFCH | The probability of the PSFCH using type2 A/B/C for channel access |
|---|---|
| ReTx Num=0 | 0.2 |
| ReTx Num=1 | 0.4 |
| ReTx Num=2 | 0.6 |

In some embodiments, for determining the channel access type used for PSSCH transmission, the channel access type for a current PSSCH may be determined according to the transmission times of the current PSSCH. The closer the PSSCH transmission times to a maximum transmission times, the higher the probability of the PSSCH using the second channel access type for channel access, and accordingly, the lower the probability of using the first channel access type.

In some embodiments, the maximum retransmission times of the PSSCH being two are taken as an example. The corresponding relationship between the transmission times of the PSSCH and the probability of the PSSCH using the second channel access type may be show in Table 3 below.

**Table 3**

| The transmission times of a current PSSCH | The probability of the PSSCH using type2 A/B/C for channel access |
|---|---|
| ReTx Num=0 | 0.0 |
| ReTx Num=1 | 0.4 |
| ReTx Num=2 | 0.6 |

In some embodiments, the probability of using the second channel access type may correspond to the PSSCH associated with the PSFCH or the channel access priority class (CAPC) of the PSSCH associated with the PSFCH. CAPCs of different PSSCHs correspond to the combinations of probabilities of different PSFCHs using the second channel access type or correspond to probabilities of different PSSCHs using the second channel access type.

In some embodiments, the higher the CAPC of the PSSCH corresponding to the PSFCH, the higher the probability of the PSFCH using the second channel access type for channel access.

In other embodiments, the higher the CAPC of the PSSCH, the higher the probability of the PSSCH using the second channel access type.

In some examples, one PSSCH corresponding to three PSFCH transmission occasions is taken as an example. Considering the CAPC, the corresponding relationship of the PSFCH using the second channel access type for channel access may be shown in Table 4 below.

**Table 4**

| The CAPC of the PSSCH | The probability P of the PSFCH using type2 A/B/C for channel access | | |
|---|---|---|---|
| | PSFCH occasion1 | PSFCH occasion2 | PSFCH occasion3 |
| CAPC=1 | 0.4 | 0.6 | 0.8 |
| CAPC=2 | 0.3 | 0.5 | 0.7 |
| CAPC=3 | 0.2 | 0.4 | 0.6 |
| CAPC=4 | 0.2 | 0.3 | 0.5 |

In other embodiments, for the feedback occasion of the PSFCH corresponding to the PSSCH, the probability of using the second channel access type for channel access of the PSFCH is determined according to the transmission times of the PSSCH and the CAPC of the PSSCH. The corresponding relationship between the transmission times of the PSSCH as well as the CAPC of the PSCCH and the probability may be shown in Table 5 below, where the maximum retransmission times of the PSSCH being two is shown.

**Table 5**

| The CAPC of the PSCCH | The transmission times of the PSSCH corresponding to a current PSFCH | The probability of the PSFCH using type2 A/B/C for channel access |
|---|---|---|
| CAPC=1 | ReTx Num=0 | 0.4 |
| | ReTx Num=1 | 0.7 |
| | ReTx Num=2 | 1 |
| CAPC=2 | ReTx Num=0 | 0.4 |
| | ReTx Num=1 | 0.6 |
| | ReTx Num=2 | 0.8 |
| CAPC=3 | ReTx Num=0 | 0.3 |
| | ReTx Num=1 | 0.4 |
| | ReTx Num=2 | 0.7 |
| CAPC=4 | ReTx Num=0 | 0.2 |
| | ReTx Num=1 | 0.4 |
| | ReTx Num=2 | 0.6 |

In another embodiment, for PSSCH transmission, the probability of using the second channel access type for channel access of the PSSCH is determined according to the transmission times of the PSSCH and the CAPC of the PSSCH. The corresponding relationship between the transmission times of the PSSCH as well as the CAPC of the PSCCH and the probability may be shown in Table 6 below, where the maximum retransmission times of the PSSCH being two is shown.

**Table 6**

| The CAPC of the PSSCH | The transmission times of a current to-be-transmitted PSSCH | The probability of the PSSCH using type2 A/B/C for channel access |
|---|---|---|
| CAPC=1 | ReTx Num=0 | 0 |
| | ReTx Num=1 | 0.7 |
| | ReTx Num=2 | 1 |
| CAPC=2 | ReTx Num=0 | 0 |
| | ReTx Num=1 | 0.6 |
| | ReTx Num=2 | 0.8 |
| CAPC=3 | ReTx Num=0 | 0 |
| | ReTx Num=1 | 0.4 |
| | ReTx Num=2 | 0.7 |
| CAPC=4 | ReTx Num=0 | 0 |
| | ReTx Num=1 | 0.4 |
| | ReTx Num=2 | 0.6 |

In some embodiments, for multiple time domain sending occasions of an S-SSB signal, the probability of using the second channel access type as the access type of the S-SSB signal may be determined according to a group where the S-SSB is located and the time domain sending occasions of the S-SSB. The closer the time domain sending occasion to a last sending occasion, the higher the probability of the S-SSB signal using the second channel access type as the access type, and accordingly, the lower the probability of using the first channel access type as the access type. Referring to FIG. 11, resources corresponding to the S-SSB in the system may be grouped, and different groups may correspond to different probabilities. The probability of the S-SSB using the second type of channel access type for channel access and the group may be shown in Table 7 below.

**Table 7**

| | The probability P of the S-SSB using type2 for channel access | | |
|---|---|---|---|
| | S-SSB occasion1 | S-SSB occasion2 | S-SSB occasion3 |
| Group 1 | 0.4 | 0.6 | 0.9 |
| Group 2 | 0.2 | 0.4 | 0.8 |

In some embodiments, the preceding method for determining the probability includes configuration, pre-configuration or system predefinition.

In other embodiments, the transmission situation of the second signal includes at least one of: a channel occupancy time of a second signal of the first node prior to the first signal of the first node; a channel access priority class of a second signal of the first node prior to the first signal of the first node; a channel occupancy time of a second signal of the second node prior to the first signal of the first node; a channel access priority class of a second signal of the second node prior to the first signal of the first node; the transmission times of a signal/channel sent by the first node using the second channel access type during an observation time; total transmission duration of a signal/channel sent by the first node using the second channel access type during an observation time; the number of used subchannels of a signal/channel sent by the first node using the second channel access type during an observation time; the number of used slots of a signal/channel sent by the first node using the second channel access type during an observation time; the number of resource block sets of a signal/channel sent by the first node using the second channel access type during an observation time; a channel busy ratio counted by the first node; or a channel occupancy ratio counted by the first node.

In the embodiments of the present application, the transmission situation of the second signal may be compared with a threshold so that the channel access type of the first signal of the first node is determined. It is to be understood that the threshold may have different meanings according to different parameters included in the transmission situation of the second signal. For example, the threshold compared with the channel busy ratio counted by the first node may be different from the threshold compared with the channel occupancy ratio counted by the first node.

In an example implementation, determining the channel access type of the first signal of the first node according to the first information includes at least one of the following.

In response to the transmission times meeting a threshold, the channel access type of the first signal is determined as the second channel access type.

In response to the total transmission duration meeting a threshold, the channel access type of the first signal is determined as the second channel access type.

In response to the number of used subchannels meeting a threshold, the channel access type of the first signal is determined as the second channel access type.

In response to the number of used slots meeting a threshold, the channel access type of the first signal is determined as the second channel access type.

In response to the number of resource block sets meeting a threshold, the channel access type of the first signal is determined as the second channel access type.

In response to the transmission times not meeting a threshold, the channel access type of the first signal is determined as the first channel access type.

In response to the total transmission duration not meeting a threshold, the channel access type of the first signal is determined as the first channel access type.

In response to the number of used subchannels not meeting a threshold, the channel access type of the first signal is determined as the first channel access type.

In response to the number of used slots not meeting a threshold, the channel access type of the first signal is determined as the first channel access type.

In response to the number of resource block sets not meeting a threshold, the channel access type of the first signal is determined as the first channel access type.

The threshold is determined according to system configuration, pre-configuration or a predefined rule.

In the embodiments of the present application, when one or more of the transmission times, the total transmission duration, the number of used subchannels, the number of used slots and the number of resource block sets of the signal/channel sent by the first node using the second channel access type during the observation time meet one or more respective thresholds, and/or the transmission times, the total transmission duration, the number of used subchannels, the number of used slots and the number of resource block sets of the signal/channel sent by the first node using the second channel access type during the observation time as an entirement meet a threshold, the first signal may use the second channel access type for channel access; otherwise, the first signal may use the first channel access type for channel access. That is, when the transmission times, the total transmission duration, the number of used subchannels, the number of used slots and the number of resource block sets of the signal/channel sent by the first node using the second channel access type during the observation time do not meet respective thresholds, and/or at least one of the transmission times, the total transmission duration, the number of used subchannels, the number of used slots or the number of resource block sets of the signal/channel sent by the first node using the second channel access type during the observation time does not meet a common corresponding threshold, the first signal may use the first channel access type for channel access. The threshold may be determined according to system configuration, pre-configuration or a predefined rule, and meeting the threshold may include being larger than or equal to the threshold, being smaller than or equal to the threshold, being larger than the threshold, being smaller than the threshold, etc.

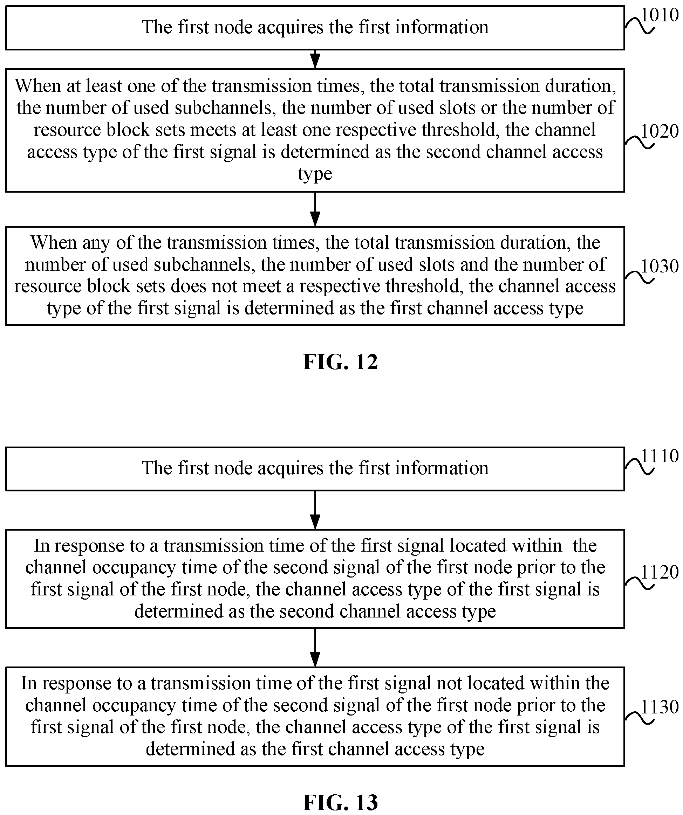

FIG. 12 is a flowchart of a method for determining a sidelink channel access type according to an embodiment of the present application, illustrating an example where the transmission situation of the second signal includes the transmission times, the total transmission duration, the number of used subchannels, the number of used slots and the number of resource block sets of the signal/channel sent by the first node using the second channel access type during the observation time. Referring to FIG. 12, the method provided in the embodiments of the present application specifically includes the following operations.

In operation 1010, the first node acquires the first information.

In operation 1020, when at least one of the transmission times, the total transmission duration, the number of used subchannels, the number of used slots or the number of resource block sets meets at least one respective threshold, the channel access type of the first signal is determined as the second channel access type.

In the embodiments of the present application, when at least one of the transmission times, total transmission duration, the number of used subchannels, the number of used slots or the number of resource block sets of the signal/channel sent by using the second channel access type during the observation time meets a threshold, the channel access type of the first signal is determined as the second channel access type, where the transmission times, the total transmission duration, the number of used subchannels, the number of used slots and the number of resource block sets meet respective thresholds respectively. For example, at least one of the transmission times, the total transmission duration, the number of used subchannels, the number of used slots or the number of resource block sets is larger than or equal to at least one threshold respectively, or at least one of the transmission times, the total transmission duration, the number of used subchannels, the number of used slots or the number of resource block sets is smaller than or equal to at least one threshold respectively.

In operation 1030, when any of the transmission times, the total transmission duration, the number of used subchannels, the number of used slots and the number of resource block sets does not meet a respective threshold, the channel access type of the first signal is determined as the first channel access type.

Specifically, when the transmission times, the total transmission duration, the number of used subchannels, the number of used slots and the number of resource block sets of the signal/channel sent by using the second channel access type during the observation time do not meet thresholds, the channel access type of the first signal is determined as the first channel access type, where the transmission times, the total transmission duration, the number of used subchannels, the number of used slots and the number of resource block sets do not meet respective thresholds. For example, at least one of the transmission times, the total transmission duration, the number of used subchannels, the number of used slots or the number of resource block sets is smaller than at least one respective threshold, or at least one of the transmission times, the total transmission duration, the number of used subchannels, the number of used slots or the number of resource block sets is larger than at least one respective threshold.

In some example implementations, for a PSFCH, an S-SSB, a PRS, a CSI-RS, a PSCCH or a PSSCH, information such as the transmission times, total transmission duration, the number of used subchannels, the number of used slots and the number of resource block sets of a sidelink signal/channel sent by using the second channel access type at the terminal may be counted during a period of time before transmission. In the case where at least one of the transmission times, the total transmission duration, the number of used subchannels, the number of used slots and the number of resource block sets is smaller than a corresponding threshold respectively or a combination of at least one of the transmission times, the total transmission duration, the number of used subchannels, the number of used slots and the number of resource block sets is smaller than a threshold, the PSFCH, the S-SSB, the PRS, the CSI-RS, the PSCCH or the PSSCH uses the second channel access type for channel access; otherwise, the PSFCH, the S-SSB, the PRS, the CSI-RS, the PSCCH or the PSSCH uses the first channel access type for channel access.

FIG. 13 is a flowchart of a method for determining a sidelink channel access type according to an embodiment of the present application, illustrating an example where the transmission situation of the second signal includes the channel occupancy time of the second signal of the first node. Referring to FIG. 13, the method provided in the embodiments of the present application specifically includes the following operations.

In operation 1110, the first node acquires the first information.

In operation 1120, in response to a transmission time of the first signal located within the channel occupancy time of the second signal of the first node prior to the first signal of the first node, the channel access type of the first signal is determined as the second channel access type.

In the embodiments of the present application, if the transmission time of the first signal is within the channel occupancy time of the second signal of the first node, where the second signal of the first node is transmitted before the first signal, the channel access type of the first signal may be the second channel access type.

In operation 1130, in response to a transmission time of the first signal not located within the channel occupancy time of the second signal of the first node prior to the first signal of the first node, the channel access type of the first signal is determined as the first channel access type.

Specifically, if the transmission time of the first signal is not within the channel occupancy time of the second signal of the first node, where the second signal of the first node is transmitted before the first signal, the channel access type of the first signal may be the first channel access type.

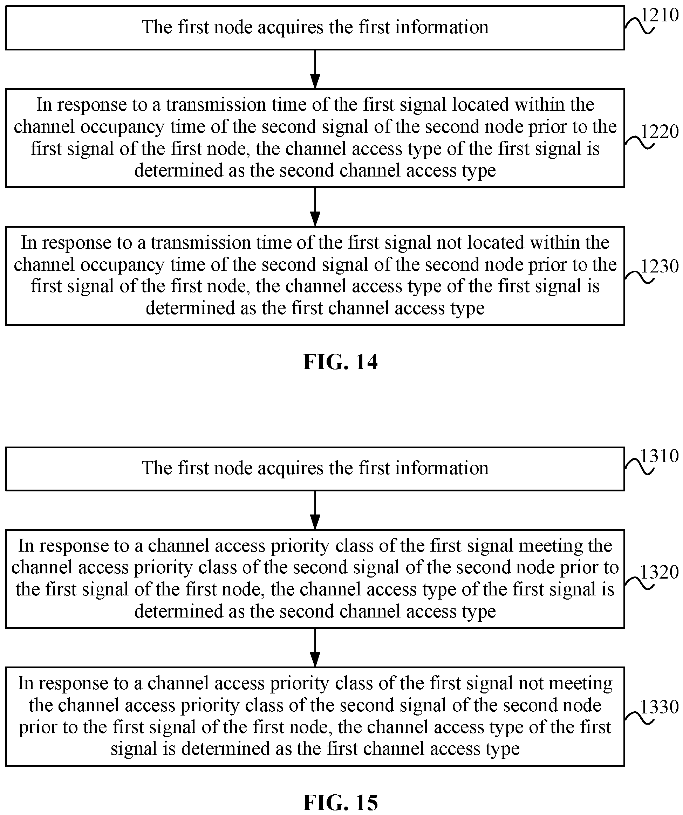

FIG. 14 is a flowchart of a method for determining a sidelink channel access type according to an embodiment of the present application, illustrating an example where the transmission situation of the second signal includes the channel occupancy time of the second signal of the second node. Referring to FIG. 14, the method provided in the embodiments of the present application specifically includes the following operations.

In operation 1210, the first node acquires the first information.

In operation 1220, in response to a transmission time of the first signal located within the channel occupancy time of the second signal of the second node prior to the first signal of the first node, the channel access type of the first signal is determined as the second channel access type.

In the embodiments of the present application, if the transmission time of the first signal is within the channel occupancy time of the second signal the second node transmitted prior to the first signal, the channel access type of the first signal may be the second channel access type.

In operation 1230, in response to a transmission time of the first signal not located within the channel occupancy time of the second signal of the second node prior to the first signal of the first node, the channel access type of the first signal is determined as the first channel access type.

Specifically, if the transmission time of the first signal is not within the channel occupancy time of the second signal transmitted by a second node, where the second signal of the second node is transmitted prior to the first signal, the channel access type of the first signal may be the first channel access type.

In an example implementation, in the case of type1 of sidelink transmission, the base station schedules multiple PSSCH transmissions of the UE and/or multiple PSFCH transmissions associated with PSSCH of the UE through one piece of downlink control information (DCI), when the first transmitted signal/channel successfully accesses the channel using the first channel access type or the second channel access type, and a transmission time of the next to-be-transmitted signal/channel is still within the COT of the previous transmitted signal/channel, the next to-be-transmitted signal/channel uses the second channel access type for channel access; otherwise, the next to-be-transmitted signal/channel uses the first channel access type for channel access.

In another example implementation, in the case of type2 of sidelink transmission, for multiple PSSCH transmissions of the UE and/or multiple PSFCH transmissions associated with PSSCH of the UE, the first transmitted signal/channel successfully accesses the channel using the first channel access type or the second channel access type, and a transmission time of the next to-be-transmitted signal/channel is still within the COT of the previous transmitted signal/channel, the next to-be-transmitted signal/channel uses the second channel access type for channel access; otherwise, the next to-be-transmitted signal/channel uses the first channel access type for channel access.

FIG. 15 is a flowchart of a method for determining a sidelink channel access type according to an embodiment of the present application, illustrating an example where the transmission situation of the second signal includes the channel occupancy time of the second signal of the second node. Referring to FIG. 15, the method provided in the embodiments of the present application specifically includes the following operations.

In operation 1310, the first node acquires the first information.

In operation 1320, in response to a channel access priority class of the first signal meeting the channel access priority class of the second signal of the second node prior to the first signal of the first node, the channel access type of the first signal is determined as the second channel access type.

In the embodiments of the present application, the channel access priority class of the first signal meets the channel access priority class of the second signal of the second node, which may include that the channel access priority class of the first signal is higher than or equal to the channel access priority class of the second signal of the second node, or the channel access priority class of the first signal is lower than or equal to the channel access priority class of the second signal of the second node. In the case where the channel access priority class of the first signal is higher than or equal to the channel access priority class of the second signal of the second node or the channel access priority class of the first signal is lower than or equal to the channel access priority class of the second channel of the second node, it can be determined that the first signal uses the second channel access type for channel access.

In operation 1330, in response to a channel access priority class of the first signal not meeting the channel access priority class of the second signal of the second node prior to the first signal of the first node, the channel access type of the first signal is determined as the first channel access type.

Specifically, the channel access priority class of the first signal does not meet the channel access priority class of the second signal of the second node, which may include that the channel access priority class of the first signal is lower than the channel access priority class of the second signal of the second node, or the channel access priority class of the first signal is higher than the channel access priority class of the second channel of the second node. In the case of the channel access priority class of the first signal not meeting the channel access priority class of the second signal of the second node, it can be determined that the first signal uses the first channel access type for channel access.

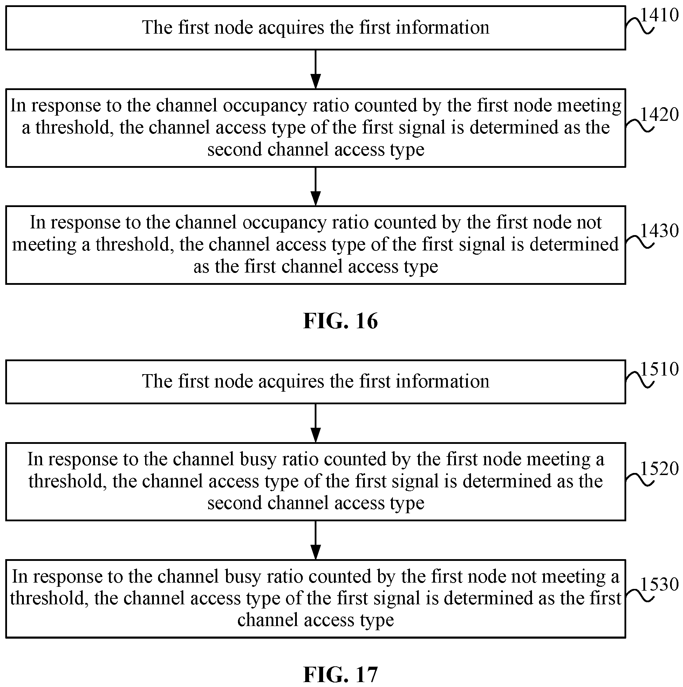

FIG. 16 is a flowchart of a method for determining a sidelink channel access type according to an embodiment of the present application, illustrating an example where the transmission situation of the second signal includes the channel occupancy ratio. Referring to FIG. 16, the method provided in the embodiments of the present application specifically includes the following operations.

In operation 1410, the first node acquires the first information.

In operation 1420, in response to the channel occupancy ratio counted by the first node meeting a threshold, the channel access type of the first signal is determined as the second channel access type.

In the embodiments of the present application, if the channel occupancy ratio counted by the first node is larger than or equal to the threshold or the channel occupancy ratio counted by the first node is smaller than or equal to the threshold, the first signal may use the second channel access type for channel access. It is to be understood that the meeting in the embodiments of the present application may include the channel occupancy ratio counted by the first node being larger than or equal to the threshold or the channel occupancy ratio counted by the first node being smaller than or equal to the threshold. The threshold may be determined according to system configuration, pre-configuration or a predefined rule.

In 1430, in response to the channel occupancy ratio counted by the first node not meeting a threshold, the channel access type of the first signal is determined as the first channel access type.

In the embodiments of the present application, in the case where the channel occupancy ratio counted by the first node does not meet the threshold, the first signal may use the first channel access type for channel access. The not meeting may include the channel occupancy ratio counted by the first node being smaller than or equal to the threshold or the channel occupancy ratio counted by the first node being larger than or equal to the threshold. The threshold may be determined according to system configuration, pre-configuration or a predefined rule.

FIG. 17 is a flowchart of a method for determining a sidelink channel access type according to an embodiment of the present application, illustrating an example where the transmission situation of the second signal includes the channel busy ratio of the second signal. Referring to FIG. 17, the method provided in the embodiments of the present application specifically includes the following operations.

In operation 1510, the first node acquires the first information.

In operation 1520, in response to the channel busy ratio counted by the first node meeting a threshold, the channel access type of the first signal is determined as the second channel access type.

In the embodiments of the present application, in the case where the channel busy ratio counted by the first node meets the threshold, the first signal may use the second channel access type for channel access. The channel busy ratio counted by the first node meeting the threshold may include the channel busy ratio counted by the first node being larger than or equal to the threshold or the channel busy ratio counted by the first node being smaller than or equal to the threshold. The threshold may be determined according to system configuration, pre-configuration or a predefined rule.

In operation 1530, in response to the channel busy ratio counted by the first node not meeting a threshold, the channel access type of the first signal is determined as the first channel access type.

In the embodiments of the present application, in the case where the channel busy ratio counted by the first node does not meet the threshold, the first signal may use the first channel access type for channel access. The the channel busy ratio counted by the first node not meeting the threshold may include the channel busy ratio counted by the first node being smaller than or equal to the threshold or the channel busy ratio counted by the first node being larger than or equal to the threshold. The threshold may be determined according to system configuration, pre-configuration or a predefined rule.

In some embodiments, the channel busy ratio includes at least one of the following: the channel busy ratio with a frequency domain counting range being a frequency domain range of a sidelink resource pool; the channel busy ratio with a frequency domain counting range being a frequency domain range of a resource block set where the first signal is located; the channel busy ratio with a frequency domain counting range being an effective slot within a time window which is configured, preconfigured or predefined; or, the channel busy ratio with a frequency domain counting range being an effective symbol within a time window which is configured, preconfigured or predefined.

In some embodiments, the channel busy ratio counted is obtained in at least one of the following manners: a ratio of the number of slots with energy greater than a threshold to the total number of slots within a counting time window is counted on a time domain resource within the counting time window and a frequency domain resource within the counting time window; a ratio of the number of symbols with energy greater than a threshold to the total number of symbols within a counting time window is counted on a time domain resource within the counting time window and a frequency domain resource within the counting time window; or, a ratio of the number of slots with target energy greater than a threshold to the total number of slots within a counting time window is counted on a time domain resource within the counting time window, where the target energy is energy occupied by a non-3GPP system channel/signal within the counting time window.

In the embodiments of the present application, the non-3GPP system channel/signal may be a channel/signal in the total energy with channels or signals defined in the 3GPP system excluded. The channels or signals defined in the 3GPP system include channels or signals such as PSCCHs, PSSCHs, S-SSBs, PSFCHs, physical uplink control channels (PUCCHs), physical uplink shared channels (PUSCHs), physical random access channels (PRACHs), sounding reference signals (SRSs), physical downlink control channels (PDCCHs), physical downlink shared channels (PDSCHs), CSI-RSs, SSBs, PRSs, remote interference management reference signals (RIM-RSs) and cyclic prefix extension (ECP) signals.

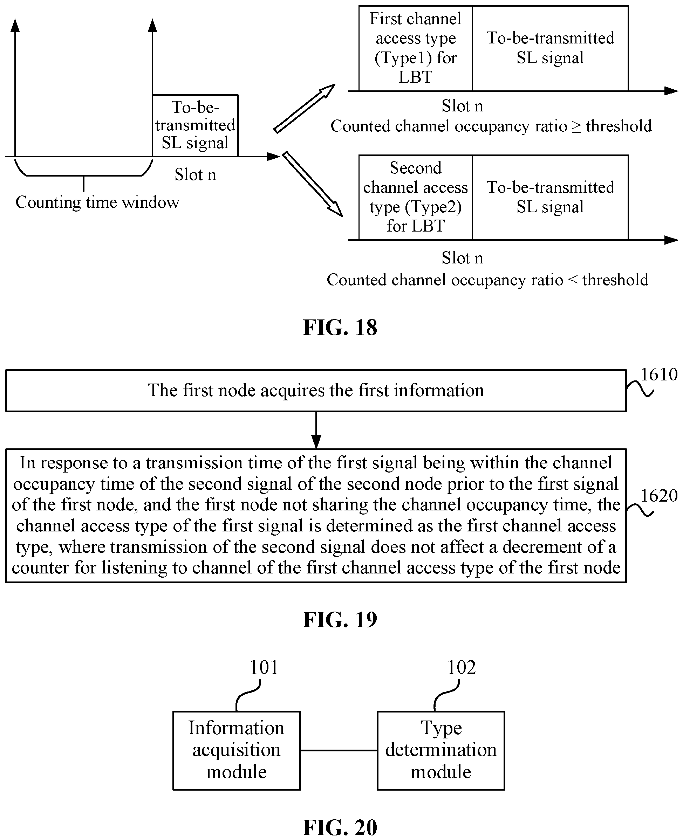

In some embodiments, FIG. 18 is an schematic diagram of a method for determining a sidelink channel access type according to an embodiment of the present application. Referring to FIG. 18, the channel occupancy ratio may be counted within a time window before the transmission of a PSFCH, an S-SSB, a PSCCH or a PSSCH. If the channel occupancy ratio is smaller than a threshold, the PSFCH, the S-SSB, the PSCCH or the PSSCH uses the second channel access type for channel access; otherwise, the PSFCH, the S-SSB, the PSCCH or the PSSCH uses the first channel access type for channel access.

In other embodiments, the channel busy ratio may be counted within a time window before the transmission of a PSFCH, an S-SSB, a PSCCH or a PSSCH. If the channel busy ratio is smaller than the threshold, the PSFCH, the S-SSB, the PSCCH or the PSSCH uses the second channel access type for channel access; otherwise, the PSFCH, the S-SSB, the PSCCH or the PSSCH uses the first channel access type for channel access.

FIG. 19 is a flowchart of a method for determining a sidelink channel access type according to an embodiment of the present application, illustrating an example where the transmission situation of the second signal includes the channel occupancy time of the second signal of the second node, where prior to the first signal of the first node. Referring to FIG. 19, the method provided in the embodiments of the present application specifically includes the following operations.

In operation 1610, the first node acquires the first information.

In operation 1620, in response to a transmission time of the first signal being within the channel occupancy time of the second signal of the second node prior to the first signal of the first node, and the first node not sharing the channel occupancy time, the channel access type of the first signal is determined as the first channel access type, where transmission of the second signal does not affect a decrement of a counter for listening to channel of the first channel access type of the first node.

In the embodiments of the present application, if the transmission time of the first signal is within the channel occupancy time of the second signal of the second node, and the first node does not share the channel occupancy time, the first signal uses the first channel access type for channel access. In this case, the transmission of the second signal does not affect the decrement of the counter for listening to channel of the first channel access type of the first node.

In some embodiments, if another known 3GPP system signal/channel is transmitted before transmission of a sidelink channel or a sidelink signal, and the sidelink channel or the sidelink signal cannot share the COT of the known 3GPP system signal, the transmission of the another known channel/signal does not affect the decrement of the counter for listening to channel of the sidelink channel/signal when the sidelink channel/signal uses the first channel access type. The 3GPP system signal/channel includes a channel/signal that is defined in the 3GPP system and can be recognized or predicted by UE, such as a PSCCH, PSSCH, S-SSB, PSFCH, PUCCH, PUSCH, PRACH, or SRS channel/signal, or a PDCCH, PDSCH, CSI-RS, SSB, PRS, or RIM-RS channel/signal.

In other embodiments, if there is a COT shared by another known 3GPP system signal/channel before transmission of a sidelink channel or a sidelink signal, and the transmission of the sidelink channel or the sidelink signal is within the shared COT, regardless high or low the CAPC of the current transmission or the CAPC of the transmission of the shared COT is, the sidelink channel or the sidelink signal can continue to use the shared COT, and the sidelink channel or the sidelink signal can use the second channel access type for channel access.

FIG. 20 is a structural diagram of an apparatus for determining a sidelink channel access type according to an embodiment of the present application. The apparatus may perform the method for determining a sidelink channel access type provided in any embodiment of the present application and has function modules and beneficial effects corresponding to the method performed. The apparatus may be implemented by software and/or hardware and is generally integrated in user equipment. Referring to FIG. 20, the apparatus specifically includes an information acquisition module 101 and a type determination module 102.

The information acquisition module 101 is configured to acquire first information for a first node.

The type determination module 102 is configured to determine a channel access type of a first signal of the first node according to the first information.

In the embodiments of the present application, the information acquisition module acquires the first information, and the type determination module determines the channel access type of the first signal according to the first information, so the sidelink channel access type is accurately determined, and the success rate of channel access is improved.

In some embodiments, in the apparatus, the first information includes at least one of: a transmission situation of the first signal, a transmission situation of a second signal or a probability of the first signal using a second channel access type corresponding to the transmission situation of the first signal, where the first signal includes a to-be-transmitted channel/signal of the first node, and the second signal includes a transmitted channel/signal of the first node and a transmitted channel/signal of a second node.

In some embodiments, in the apparatus, the transmission situation of the first signal includes at least one of: a signal type of the first signal of the first node, where the signal type includes at least one of a PSCCH/PSSCH, an S-SSB, a PSFCH or a CSI-RS; a channel access priority class (CAPC) of the first signal of the first node; a channel access priority class of a traffic channel associated with the first signal of the first node; the transmission times of the first signal of the first node; the transmission times of a traffic channel associated with the first signal of the first node; a group where the first signal of the first node is located; a relative position of the first signal of the first node within a group where the first signal of the first node is located; or a feedback occasion of the first signal of the first node.

In some embodiments, the type determination module 102 is specifically configured to determine the probability of the first signal using the second channel access type according to the first information, where the probabilities of the first signal using the second channel access type corresponds to the signal types of the first signal of the first node in a one to one manner. A corresponding relationship between the signal types of the first signal and the probabilities of the first signal using the second channel access type is determined according to system configuration, pre-configuration or a predefined rule.

In some embodiments, the type determination module 102 is specifically configured to determine the probability of the first signal using the second channel access type according to the first information, where probabilities of the first signal using the second channel access type corresponds to the channel access priority classes of the first signal of the first node in the first information in a one to one manner. A corresponding relationship between the channel access priority classes of the first signal and the probabilities of the first signal using the second channel access type is determined according to system configuration, pre-configuration or a predefined rule.

In some embodiments, the type determination module 102 is specifically configured to determine the probability of the first signal using the second channel access type according to the first information, where the probabilities of the first signal using the second channel access type correspond to the channel access priority classes of the traffic channel associated with the first signal of the first node in a one to one manner. A corresponding relationship between the channel access priority class of the traffic channel associated with the first signal and the probabilities of the first signal using the second channel access type is determined according to system configuration, pre-configuration or a predefined rule.

In some embodiments, the type determination module 102 is specifically configured to determine the probability of the first signal using the second channel access type according to the first information, where the probabilities of the first signal using the second channel access type correspond to the transmission times of the first signal of the first node in a one to one manner. A corresponding relationship between the transmission times of the first signal and the probabilities of the first signal using the second channel access type is determined according to system configuration, pre-configuration or a predefined rule.

In some embodiments, the type determination module 102 is specifically configured to determine the probability of the first signal using the second channel access type according to the first information, where the probabilities of the first signal using the second channel access type correspond to the transmission times of the traffic channel associated with the first signal of the first node in a one to one manner. A corresponding relationship between the transmission times of the traffic channel associated with the first signal and the probabilities of the first signal using the second channel access type is determined according to system configuration, pre-configuration or a predefined rule.

In some embodiments, the type determination module 102 is specifically configured to determine the probability of the first signal using the second channel access type according to the first information, where the probabilities of the first signal using the second channel access type correspond to the groups where the first signal of the first node is located in a one to one manner. A corresponding relationship between the groups where the first signal is located and the probabilities of the first signal using the second channel access type is determined according to system configuration, pre-configuration or a predefined rule.

In some embodiments, the type determination module 102 is specifically configured to determine the probability of the first signal using the second channel access type according to the first information, where the probabilities of the first signal using the second channel access type correspond to the relative positions of the first signal of the first node within the group where the first signal of the first node is located in a one to one manner. A corresponding relationship between the relative positions of the first signal within the group where the first signal is located and the probabilities of the first signal using the second channel access type is determined according to system configuration, pre-configuration or a predefined rule.

In some embodiments, the type determination module 102 is specifically configured to determine the probability of the first signal using the second channel access type according to the first information, where the probabilities of the first signal using the second channel access type correspond to the feedback occasions of the first signal of the first node in a one to one manner. A corresponding relationship between the feedback occasions of the first signal and the probabilities of the first signal using the second channel access type is determined according to system configuration, pre-configuration or a predefined rule.

In some embodiments, in the apparatus, the transmission situation of the second signal includes at least one of: a channel occupancy time of a second signal of the first node prior to the first signal of the first node; a channel access priority class of a second signal of the first node prior to the first signal of the first node; a channel occupancy time of a second signal of the second node prior to the first signal of the first node; a channel access priority class of a second signal of the second node prior to the first signal of the first node; the transmission times of a signal/channel sent by the first node using the second channel access type during an observation time; total transmission duration of a signal/channel sent by the first node using the second channel access type during an observation time; the number of used subchannels of a signal/channel sent by the first node using the second channel access type during an observation time; the number of used slots of a signal/channel sent by the first node using the second channel access type during an observation time; the number of resource block sets of a signal/channel sent by the first node using the second channel access type during an observation time; a channel busy ratio counted by the first node; ora channel occupancy ratio counted by the first node.

In some embodiments, the type determination module 102 is specifically configured to determine at least one of the following.

In response to the transmission times meeting a threshold, the channel access type of the first signal is determined as the second channel access type.

In response to the total transmission duration meeting a threshold, the channel access type of the first signal is determined as the second channel access type.

In response to the number of used subchannels meeting a threshold, the channel access type of the first signal is determined as the second channel access type.

In response to the number of used slots meeting a threshold, the channel access type of the first signal is determined as the second channel access type.

In response to the number of resource block sets meeting a threshold, the channel access type of the first signal is determined as the second channel access type.

In response to the transmission times not meeting a threshold, the channel access type of the first signal is determined as a first channel access type.

In response to the total transmission duration not meeting a threshold, the channel access type of the first signal is determined as a first channel access type.

In response to the number of used subchannels not meeting a threshold, the channel access type of the first signal is determined as a first channel access type.

In response to the number of used slots not meeting a threshold, the channel access type of the first signal is determined as a first channel access type.

In response to the number of resource block sets not meeting a threshold, the channel access type of the first signal is determined as a first channel access type.

The threshold is determined according to system configuration, pre-configuration or a predefined rule.

In some embodiments, the type determination module 102 is specifically configured to perform at least one of: in response to a transmission time of the first signal located within the channel occupancy time of the second signal of the first node prior to the first signal of the first node, that the channel access type of the first signal is determined as the second channel access type; or, in response to a transmission time of the first signal not located within the channel occupancy time of the second signal of the first node prior to the first signal of the first node, that the channel access type of the first signal is determined as the first channel access type.

In some embodiments, the type determination module 102 is specifically configured to: perform: in response to a transmission time of the first signal located within the channel occupancy time of the second signal of the second node prior to the first signal of the first node, that the channel access type of the first signal is determined as the second channel access type; and, in response to a transmission time of the first signal not located within the channel occupancy time of the second signal of the second node prior to the first signal of the first node, that the channel access type of the first signal is determined as the first channel access type.

In some embodiments, the type determination module 102 is specifically configured to perform: in response to a channel access priority class of the first signal meeting the channel access priority class of the second signal of the second node prior to the first signal of the first node, that the channel access type of the first signal is determined as the second channel access type; and, in response to a channel access priority class of the first signal not meeting the channel access priority class of the second signal of the second node prior to the first signal of the first node, that the channel access type of the first signal is determined as the first channel access type.

In some embodiments, the type determination module 102 is specifically configured to perform: in response to the channel occupancy ratio counted by the first node meeting a threshold, that the channel access type of the first signal is determined as the second channel access type; and, in response to the channel occupancy ratio counted by the first node not meeting a threshold, that the channel access type of the first signal is determined as the first channel access type.

In some embodiments, the type determination module 102 is specifically configured to perform: in response to the channel busy ratio counted by the first node meeting a threshold, that the channel access type of the first signal is determined as the second channel access type; and, in response to the channel busy ratio counted by the first node not meeting a threshold, that the channel access type of the first signal is determined as the first channel access type.

In some embodiments, in the apparatus, the channel busy ratio includes at least one of: a frequency domain counting range of the channel busy ratio being a frequency domain range of a sidelink resource pool; a frequency domain counting range of the channel busy ratio being a frequency domain range of a resource block set where the first signal is located; a time domain counting range of the channel busy ratio being an effective slot within a time window which is configured, preconfigured or predefined; or, a time domain counting range of the channel busy ratio being an effective symbol within a time window which is configured, preconfigured or predefined.

In some embodiments, in the apparatus, counting of the channel busy ratio includes at least one of: a ratio of the number of slots with energy greater than a threshold to the total number of slots within a counting time window being counted on a time domain resource within the counting time window and a frequency domain resource within the counting time window; a ratio of the number of symbols with energy greater than a threshold to the total number of symbols within a counting time window being counted on a time domain resource within the counting time window and a frequency domain resource within the counting time window; or, a ratio of the number of slots with target energy greater than a threshold to the total number of slots within a counting time window being counted on a time domain resource within the counting time window, where the target energy is energy occupied by a non-3GPP system channel/signal within the counting time window.

In some embodiments, the type determination module 102 is specifically configured to perform: in response to a transmission time of the first signal being within the channel occupancy time of the second signal of the second node prior to the first signal of the first node, and the first node not sharing the channel occupancy time, that the channel access type of the first signal is determined as the first channel access type, where transmission of the second signal does not affect a decrement of a counter for listening to channel of the first channel access type of the first node.

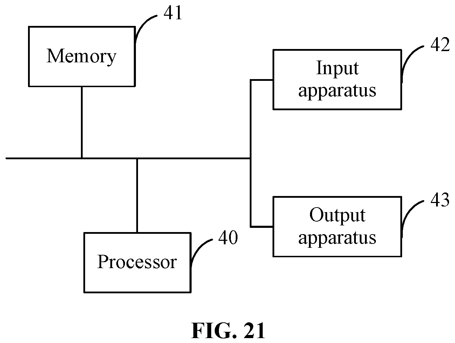

FIG. 21 is a structural diagram of an electronic device according to an embodiment of the present application. The electronic device includes a processor 40, a memory 41, an input apparatus 42 and an output apparatus 43. One or more processors 40 may be included in the electronic device. One processor 40 is shown as an example in FIG. 21. The processor 40, the memory 41, the input apparatus 42 and the output apparatus 43 in the electronic device may be connected via a bus or in other manners. The connection via a bus is shown as an example in FIG. 21.

As a computer-readable storage medium, the memory 41 may be configured to store software programs, computer-executable programs and modules, such as a module (the information acquisition module 101 or the type determination module 102) corresponding to the apparatus for determining a sidelink channel access type in the embodiments of the present application. The processor 40 executes software programs, instructions and modules stored in the memory 41 to perform function applications and data processing of the electronic device, that is, to perform the preceding method for determining a sidelink channel access type.

The memory 41 may mainly include a program storage region and a data storage region, where the program storage region may store an operating system and an application program required by at least one function, and the data storage region may store data created according to use of the electronic device. Additionally, the memory 41 may include a high-speed random-access memory or a nonvolatile memory such as at least one disk memory, a flash memory or another nonvolatile solid-state memory. In some examples, the memory 41 may further include memories that are remotely disposed relative to the processor 40. These remote memories may be connected to the electronic device via a network. Examples of the preceding network include, but are not limited to, the Internet, an intranet, a local area network, a mobile communication network and a combination thereof.

The input apparatus 42 may be configured to receive inputted digital or character information and generate key signal input related to user settings and function control of the electronic device. The output apparatus 43 may include a display device such as a display screen.

Embodiments of the present application further provide a storage medium including computer-executable instructions which, when executed by a computer processor, are configured to perform a method for determining a sidelink channel access type. The method includes the following.

A first node acquires first information.

The first node determines a channel access type of a first signal of the first node according to the first information.

From the preceding description of embodiments, it is apparent to those skilled in the art that the present application may be implemented by use of software and necessary general-purpose hardware, or may be certainly implemented by hardware, but the former is a preferred implementation in many cases. Based on this understanding, the technical solutions of the present application substantially, or the part contributing to the related art, may be embodied in the form of a software product. The computer software product may be stored in a computer-readable storage medium such as a floppy disk, a read-only memory (ROM), a random-access memory (RAM), a flash memory, a hard disk or an optical disc of a computer and includes several instructions for causing a computer device (which may be a personal computer, a server or a network device) to perform the method in the embodiments of the present application.

It is to be noted that units and modules that are included in the preceding embodiment of the apparatus are merely divided according to functional logic, and the division is not limited to this as long as the corresponding functions can be performed. Additionally, the specific names of function units are merely intended for distinguishing between each other and are not to limit the scope of the present application.

It is to be understood by those of ordinary skill in the art that some or all steps of the preceding disclosed method and function modules/units in the preceding system or device may be implemented as software, firmware, hardware and suitable combinations thereof.

In the hardware implementation, the division of the function modules/units in the preceding description may not correspond to the division of physical components. For example, one physical component may have multiple functions, or one function or step may be performed cooperatively by multiple physical components. Some or all physical components may be implemented as software executed by a processor such as a central processing unit, a digital signal processor or a microprocessor, may be implemented as hardware, or may be implemented as integrated circuits such as application-specific integrated circuits. Such software may be distributed on computer-readable media. The computer-readable media may include computer storage media (or non-transitory media) and communication media (or transitory media). As is known to those having ordinary skill in the art, the term computer storage media includes volatile and nonvolatile media as well as removable and non-removable media implemented in any method or technology for storing information (such as computer-readable instructions, data structures, program modules or other data). The computer storage media include, but are not limited to, a RAM, a ROM, an electrically erasable programmable read-only memory (EEPROM), a flash memory or other memory technologies, a compact disc read-only memory (CD-ROM), a digital video disc (DVD) or other optical disc memories, magnetic cassettes, magnetic tapes, magnetic disk memories or other magnetic storage apparatuses, or any other media used for storing the desired information and accessible by a computer. Additionally, as is known to those having ordinary skill in the art, the communication media generally include computer-readable instructions, data structures, program modules or other data in carriers or in modulated data signals transported in other transport mechanisms and may include any information delivery medium.

## Claims

1. A method for determining a sidelink channel access type, comprising:
acquiring, by a first node, first information; and
determining, by the first node, a channel access type of a first signal of the first node according to the first information.

2. The method according to claim 1, wherein the first information comprises at least one of: a transmission situation of the first signal, a transmission situation of a second signal, or a probability of the first signal using a second channel access type corresponding to a transmission situation of the first signal, wherein the first signal comprises a to-be-transmitted channel/signal of the first node, and the second signal comprises a transmitted channel/signal of the first node and a transmitted channel/signal of a second node.

3. The method according to claim 2, wherein the transmission situation of the first signal comprises at least one of:
a signal type of the first signal of the first node;
a channel access priority class of the first signal of the first node;
a channel access priority class of a traffic channel associated with the first signal of the first node;
a transmission times of the first signal of the first node;
a transmission times of a traffic channel associated with the first signal of the first node;
a group where the first signal of the first node is located;
a relative position of the first signal of the first node within a group where the first signal of the first node is located; or
a feedback occasion of the first signal of the first node.

4. The method according to claim 1, wherein determining the channel access type of the first signal of the first node according to the first information comprises:
determining, according to the first information, a probability of the first signal using a second channel access type, wherein probabilities of the first signal using the second channel access type correspond to signal types of the first signal of the first node in a one to one manner;
wherein a corresponding relationship between the signal types of the first signal and the probabilities of the first signal using the second channel access type is determined according to system configuration, pre-configuration or a predefined rule.

5. The method according to claim 1, wherein determining the channel access type of the first signal of the first node according to the first information comprises:
determining, according to the first information, a probability of the first signal using a second channel access type, wherein probabilities of the first signal using the second channel access type correspond to channel access priority classes of the first signal of the first node in the first information in a one to one manner;
wherein a corresponding relationship between the channel access priority classes of the first signal and the probabilities of the first signal using the second channel access type is determined according to system configuration, pre-configuration or a predefined rule.

6. The method according to claim 1, wherein determining the channel access type of the first signal of the first node according to the first information comprises:
determining, according to the first information, a probability of the first signal using a second channel access type, wherein probabilities of the first signal using the second channel access type correspond to channel access priority classes of a traffic channel associated with the first signal of the first node in a one to one manner;
wherein a corresponding relationship between the channel access priority classes of the traffic channel associated with the first signal and the probabilities of the first signal using the second channel access type is determined according to system configuration, pre-configuration or a predefined rule.

7. The method according to claim 1, wherein determining the channel access type of the first signal of the first node according to the first information comprises:
determining, according to the first information, a probability of the first signal using a second channel access type, wherein probabilities of the first signal using the second channel access type correspond to transmission times of the first signal of the first node in a one to one manner;
wherein a corresponding relationship between the transmission times of the first signal and the probabilities of the first signal using the second channel access type is determined according to system configuration, pre-configuration or a predefined rule.

8. The method according to claim 1, wherein determining the channel access type of the first signal of the first node according to the first information comprises:
determining, according to the first information, a probability of the first signal using a second channel access type, wherein probabilities of the first signal using the second channel access type correspond to transmission times of a traffic channel associated with the first signal of the first node in a one to one manner;
wherein a corresponding relationship between the transmission times of the traffic channel associated with the first signal and the probabilities of the first signal using the second channel access type is determined according to system configuration, pre-configuration or a predefined rule.

9. The method according to claim 1, wherein determining the channel access type of the first signal of the first node according to the first information comprises:
determining, according to the first information, a probability of the first signal using a second channel access type, wherein probabilities of the first signal using the second channel access type correspond to groups where the first signal of the first node is located in a one to one manner;
wherein a corresponding relationship between the groups where the first signal is located and the probabilities of the first signal using the second channel access type is determined according to system configuration, pre-configuration or a predefined rule.

10. The method according to claim 1, wherein determining the channel access type of the first signal of the first node according to the first information comprises:
determining, according to the first information, a probability of the first signal using a second channel access type, wherein probabilities of the first signal using the second channel access type correspond to relative positions of the first signal of the first node within a group where the first signal of the first node is located in a one to one manner;
wherein a corresponding relationship between the relative positions of the first signal within the group where the first signal is located and the probabilities of the first signal using the second channel access type is determined according to system configuration, pre-configuration or a predefined rule.

11. The method according to claim 1, wherein determining the channel access type of the first signal of the first node according to the first information comprises:
determining, according to the first information, a probability of the first signal using a second channel access type, wherein probabilities of the first signal using the second channel access type correspond to feedback occasions of the first signal of the first node in a one to one manner;
wherein a corresponding relationship between the feedback occasions of the first signal and the probabilities of the first signal using the second channel access type is determined according to system configuration, pre-configuration or a predefined rule.

12. The method according to claim 2, wherein the transmission situation of the second signal comprises at least one of:
a channel occupancy time of the second signal of the first node prior to the first signal of the first node;
a channel access priority class of a second signal of the first nodeprior to the first signal of the first node;
a channel occupancy time of a second signal of the second node prior to the first signal of the first node;
a channel access priority class of a second signal of the second node prior to the first signal of the first node;
a transmission times of a signal/channel sent by the first node using the second channel access type during an observation time;
total transmission duration of a signal/channel sent by the first node using the second channel access type during an observation time;
a number of used subchannels of a signal/channel sent by the first node using the second channel access type during an observation time;
a number of used slots of a signal/channel sent by the first node using the second channel access type during an observation time;
a number of resource block sets of a signal/channel sent by the first node using the second channel access type during an observation time;
a channel busy ratio counted by the first node; or,
a channel occupancy ratio counted by the first node.

13. The method according to claim 12, wherein determining the channel access type of the first signal of the first node according to the first information comprises at least one of:
in response to the transmission times meeting a threshold, determining the channel access type of the first signal as the second channel access type;
in response to the total transmission duration meeting a threshold, determining the channel access type of the first signal as the second channel access type;
in response to the number of used subchannels meeting a threshold, determining the channel access type of the first signal as the second channel access type;
in response to the number of used slots meeting a threshold, determining the channel access type of the first signal as the second channel access type;
in response to the number of resource block sets meeting a threshold, determining the channel access type of the first signal as the second channel access type;
in response to the transmission times not meeting a threshold, determining the channel access type of the first signal as a first channel access type;
in response to the total transmission duration not meeting a threshold, determining the channel access type of the first signal as a first channel access type;
in response to the number of used subchannels not meeting a threshold, determining the channel access type of the first signal as a first channel access type;
in response to the number of used slots not meeting a threshold, determining the channel access type of the first signal as a first channel access type; or
in response to the number of resource block sets not meeting a threshold, determining the channel access type of the first signal as a first channel access type;
wherein the threshold is determined according to system configuration, pre-configuration or a predefined rule.

14. The method according to claim 12, wherein determining the channel access type of the first signal of the first node according to the first information comprises:
in response to a transmission time of the first signal located within the channel occupancy time of the second signal of the first node prior to the first signal of the first node, determining the channel access type of the first signal as the second channel access type; or,
in response to a transmission time of the first signal not located within the channel occupancy time of the second signal of the first node prior to the first signal of the first node, determining the channel access type of the first signal as a first channel access type.

15. The method according to claim 12, wherein determining the channel access type of the first signal of the first node according to the first information comprises:
in response to a transmission time of the first signal located within the channel occupancy time of the second signal of the second node prior to the first signal of the first node, determining the channel access type of the first signal as the second channel access type; or,
in response to a transmission time of the first signal not located within the channel occupancy time of the second signal of the second node prior to the first signal of the first node, determining the channel access type of the first signal as a first channel access type.

16. The method according to claim 12, wherein determining the channel access type of the first signal of the first node according to the first information comprises:
in response to a channel access priority class of the first signal meeting the channel access priority class of the second signal of the second node prior to the first signal of the first node, determining the channel access type of the first signal as the second channel access type; or,
in response to a channel access priority class of the first signal not meeting the channel access priority class of the second signal of the second node prior to the first signal of the first node, determining the channel access type of the first signal as the second channel access type.

17. The method according to claim 12, wherein determining the channel access type of the first signal according to the first information comprises:
in response to the channel occupancy ratio counted by the first node meeting a threshold, determining the channel access type of the first signal as the second channel access type; or,
in response to the channel occupancy ratio counted by the first node not meeting a threshold, determining the channel access type of the first signal as a first channel access type.

18. The method according to claim 12, wherein determining the channel access type of the first signal according to the first information comprises:
in response to the channel busy ratio counted by the first node meeting a threshold, determining the channel access type of the first signal as the second channel access type; or,
in response to the channel busy ratio counted by the first node not meeting a threshold, determining the channel access type of the first signal as a first channel access type.

19. The method according to claim 18, wherein the channel busy ratio comprises at least one of:
the channel busy ratio with a frequency domain counting range being a frequency domain range of a sidelink resource pool;
the channel busy ratio with a frequency domain counting range being a frequency domain range of a resource block set where the first signal is located;
the channel busy ratio with a time domain counting range being an effective slot within a time window which is configured, preconfigured or predefined; or
the channel busy ratio with a time domain counting range being an effective symbol within a time window which is configured, preconfigured or predefined.

20. The method according to claim 18, wherein the channel busy ratio counted is obtained in at least one of the following manners:
counting, on a time domain resource within a counting time window and a frequency domain resource within the counting time window, a ratio of a number of slots with energy greater than a threshold to a total number of slots within the counting time window;
counting, on a time domain resource within a counting time window and a frequency domain resource within the counting time window, a ratio of a number of symbols with energy greater than a threshold to a total number of symbols within the counting time window; or
counting, on a time domain resource within a counting time window, a ratio of a number of slots with target energy greater than a threshold to a total number of slots within the counting time window, wherein the target energy is energy occupied by a non-3rd Generation Partnership Project (non-3GPP) system channel/signal within the counting time window.

21. The method according to claim 12, wherein determining the channel access type of the first signal according to the first information comprises:
in response to a transmission time of the first signal being within the channel occupancy time of the second signal of the second node prior to the first signal of the first node, and the first node not sharing the channel occupancy time, determining the channel access type of the first signal as a first channel access type, wherein transmission of the second signal does not affect a decrement of a counter for listening to channel of the first channel access type of the first node.

22. An electronic device, comprising:
at least one processor; and
a memory configured to store at least one program;
wherein the at least one program, when executed by the at least one processor, causes the at least one processor to perform the method according to any one of claims 1 to 21.

23. A computer-readable storage medium configured to store a computer program which, when executed by a processor, causes the processor to perform the method according to any one of claims 1 to 21.
